# EUROPÄISCHE PATENTSCHRIFT

(11) **EP 3 384 748 B1**
(45) Veröffentlichungstag und Bekanntmachung des Hinweises auf die Patenterteilung: **07.09.2022**
(21) Anmeldenummer: 17165282.9
(22) Anmeldetag: 06.04.2017
(51) Int. Cl.: A01C 7/12, A01C 7/06, A01C 7/10, A01C 7/08

(54) **VORRICHTUNG ZUM DOSIEREN EINES GRANULAREN ODER KÖRNIGEN MATERIALS IN EINER VERTEILMASCHINE UND VERTEILMASCHINE**
DEVICE FOR DOSING A GRANULATE OR GRANULAR MATERIAL IN A DISTRIBUTOR AND DISTRIBUTOR WITH SUCH A DEVICE
DISPOSITIF DE DOSAGE D'UN MATÉRIAU GRANULAIRE OU EN GRAINS DANS UNE ÉPANDEUSE ET ÉPANDEUSE AVEC UN TEL DISPOSITIF

(43) Veröffentlichungstag der Anmeldung: 10.10.2018
(73) Patentinhaber: Kverneland Group Soest GmbH, 59494 Soest (DE)
(72) Erfinder: Schumacher, Ferdinand, 59510 Lippetal-Oestinghausen (DE)
(74) Vertreter: Bittner, Thomas L.

(56) Entgegenhaltungen:
- DE-A1-102007 034 997
- US-A- 5 845 818
- US-A1- 2016 120 108

## Beschreibung

Die Erfindung betrifft eine Vorrichtung zum Dosieren eines granularen oder körnigen Materials in einer Verteilmaschine sowie eine Verteilmaschine, insbesondere Sämaschine, Düngerstreuer, Streumaschine oder Streugerät.

### Hintergrund

Verteilmaschinen dienen in verschiedenen Anwendungen zum Ausbringen eines granulären oder körnigen Materials. Hierzu gehören insbesondere Verteilmaschinen im landwirtschaftlichen Bereich, beispielsweise Sämaschinen oder Düngerstreuer. Aber auch im kommunalen Bereich werden Verteilmaschinen oder -geräte genutzt, um unterschiedliche granulare oder körnige Materialien wie Saatgut, Dünger oder anderes Streugut auszubringen.

Bei der Verteilmaschine ist das granulare oder körnige Material üblicherweise in einem Tank oder einem Vorratsbehälter (Reservoir) aufgenommen. Aus dem Vorratsbehälter gelangt das Material über eine Dosiervorrichtung zur Verteilvorrichtung, mit der das dosierte Material schließlich ausgebracht und verteilt wird, zum Beispiel auf eine landwirtschaftliche Nutzfläche oder eine öffentliche Fläche im kommunalen Bereich. Mithilfe der Dosiervorrichtung wird das granulare oder körnige Material für den jeweiligen Anwendungszweck dosiert, bis hin zur Vereinzelung des granlularen oder körnigen Materials.

Es sind Dosiervorrichtungen bekannt, bei denen das zu dosierende granulare oder körnige Material über eine Einlassöffnung, die an einem Gehäuse der Dosiervorrichtung gebildet ist, in einen Dosierraum gelangt. In dem Dosierraum ist ein Dosierrad auf einer Antriebswelle montiert, die im Betrieb mithilfe einer Antriebseinrichtung gedreht wird, insbesondere einem Elektromotor. Mithilfe des Dosierrads wird das Material dosiert und gelangt dann über eine Auslassöffnung an dem Gehäuse hin zur Verteilvorrichtung, mit der das dosierte Material ausgebracht und verteilt wird.

Aus dem Dokument US 2016/0120108A1 ist eine Vorrichtung zum Dosieren eines granularen oder körnigen Materials in einer Verteilmaschine bekannt. Ein Montagebauteil, an dem in einem halbseitig offenen Aufnahmeraum ein Dosierrad lösbar montiert ist, wird in einer Montageöffnung des Gehäuses wechselbar montiert. Hierbei wird das Montagebauteil mit dem hieran aufgenommenen Dosierrad mit Hilfe von Schwenkhebeln an dem Gehäuse gesichert. Mittels des Einführens des Montagebauteils in das Gehäuse wird das Dosierrad in einem Dosierraum angeordnet.

Weitere Vorrichtungen zum Dosieren eines granularen oder körnigen Materials sind in den Dokumenten DE 10 2007 034 997 A1 sowie US 5 845 818 beschrieben.

### Zusammenfassung

Aufgabe der Erfindung ist es, eine Vorrichtung zum Dosieren eines granularen oder körnigen Materials in einer Verteilmaschine sowie eine Verteilmaschine anzugeben, mit denen die Bedienfreundlichkeit verbessert und der Wartungsaufwand minimiert sind.

Zur Lösung sind eine Vorrichtung zum Dosieren eines granulären oder körnigen Materials in einer Verteilmaschine nach dem unabhängigen Anspruch 1 sowie eine Verteilmaschine nach dem unabhängigen Anspruch 13 geschaffen. Weitere alternative Ausgestaltungen sind Gegenstand von abhängigen Unteransprüchen.

Nach einem Aspekt ist eine Vorrichtung zum Dosieren eines granularen oder körnigen Materials in einer Verteilmaschine oder einem Verteilgerät geschaffen. Die Vorrichtung weist ein Gehäuse mit einer Einlassöffnung und einer Auslassöffnung auf. Durch die Einlassöffnung kann ein granulares oder körniges Material zum Dosieren in dem Gehäuse eingebracht werden. Durch die Auslassöffnung kann das granulare oder körnige Material nach dem Dosieren aus dem Gehäuse ausgebracht werden. In dem Gehäuse ist ein Dosierraum angeordnet, derart, dass das granulare oder körnige Material in dem Gehäuse von der Einlassöffnung über den Dosierraum zu der Auslassöffnung gelangen kann. In dem Dosierraum ist ein Dosierrad auf einer Antriebswelle angeordnet, welches eingerichtet ist, dass über die Einlassöffnung zugeführte granulare oder körnige Material zu dosieren. Das Gehäuse weist eine Montageöffnung auf, durch die das Dosierrad wechsel- oder lösbar in dem Dosierraum montierbar ist. Die Vorrichtung weist ein Montagebauteil auf, welches in einer montierten Stellung lösbar in der Montageöffnung und diese zumindest teilweise verschließend an dem Gehäuse angeordnet ist. Das Montagebauteil weist eine Aufnahmeeinrichtung zum lösbaren oder wechselbaren Aufnehmen des Dosierrads auf, derart, dass das an der Aufnahmeeinrichtung aufgenommene Dosierrad beim Anordnen des Montagebauteils in der montierten Stellung auf der Antriebswelle montiert wird und dass beim Lösen des Montagebauteils aus der montierten Stellung das Dosierrad zwangweise von der Antriebswelle abgenommen wird, sodass das Dosierrad hierdurch aus dem Dosierraum entfernbar und zusammen mit dem Montagebauteil von dem Gehäuse abnehmbar ist.

Nach einem weiteren Aspekt ist eine Verteilmaschine oder ein Verteilgerät zum Verteilen eines granularen oder körnigen Materials wie Saatgut, Dünger oder Streugut mit der Vorrichtung zum Dosieren geschaffen. Bei der Verteilmaschine oder dem Verteilgerät kann es sich zum Beispiel um eine Sämaschine, einen Düngerstreuer, eine Streumaschine oder ein Streugerät zum Ausbringen und zum Verteilen eines granulären oder körnigen Materials handeln.

Das an der Aufnahmeeinrichtung aufgenommene Dosierrad kann auf der Antriebswelle in einer Dosier-Betriebsstellungmontiert sein, wenn das Montagebauteil in der montierten Stellung angeordnet ist. Die Montage in der Dosier-Betriebsstellung kann automatisch oder zwangweise erfolgen, wenn das Montagebauteil in die montieret Stellung gebracht wird. In der Dosier-Betriebsstellung ist das Dosierrad eingerichtet, im Betrieb Rotations- oder Drehbewegungen mit der Antriebswelle auszuführen, welche ihrerseits mithilfe einer Antriebseinrichtung, beispielsweise einem Elektromotor, angetrieben wird. Hierbei ist sichergestellt, dass das Dosierrad leichtgängig drehbar ist und das über die Einlassöffnung zum Dosierraum gelangende Material dosiert wird, bis hin zur Vereinzelung des granularen oder körnigen Materials. Bei dieser oder anderen Ausführungsformen kann das Dosierrad in der Dosier-Betriebsstellung weiter an der Aufnahmeeinrichtung des Montagebauteils aufgenommen sein, sich nach dem Anordnen des Montagebauteils in der montierten Stellung also nicht von der Aufnahmeeinrichtung und wahlweise auch nicht von dem Montagebauteil lösen.

Das an der Aufnahmeeinrichtung aufgenommene Dosierrad kann drehbar sein, zumindest wenn das Montagebauteil in der montierten Stellung angeordnet ist. Das Dosierrad ist an der Aufnahmeeinrichtung angeordnet und drehbar, zumindest dann, wenn das Montagebauteil in der montierten Stellung angeordnet ist. Hierbei kann in einer Ausführungsform vorgesehen sein, dass die Drehbarkeit des Dosierrads an der Aufnahmeeinrichtung nur dann freigegeben ist, wenn das Montagebauteil in der montierten Stellung angeordnet ist, beispielsweise dadurch, dass mit dem Anordnen des Montagebauteils in der montierten Stellung eine Drehsperre für das Dosierrad an der Aufnahmeeinrichtung entriegelt wird, zum Beispiel dadurch, dass ein Anschlagbauteil der Aufnahmeeinrichtung gegen einen zugeordneten Anschlag in dem Dosierraum drückt, wodurch die Entriegelung erfolgt.

Die Aufnahmeeinrichtung kann ein drehbares Lagerbauteil aufweisen, an dem das Dosierrad lösbar aufgenommen ist. Das Montagebauteil kann mehrteilig oder mehrstückig aufgebaut sein, beispielsweise mit einem Gehäusedeckel, der eingerichtet ist, die Montageöffnung ganz oder teilweise zu verschließen, wenn das Montagebauteil in der montierten Stellung angeordnet ist. An dem Gehäusedeckel kann innenseitig die Aufnahmeeinrichtung angeordnet sein, wahlweise einschließlich des drehbaren Lagerbauteils. Im Betrieb der Vorrichtung zum Dosieren können sich das Dosierrad und das drehbare Lagerbauteil beide gemeinsam drehen, angetrieben mithilfe der Antriebseinrichtung der Antriebswelle. Alternativ kann das Dosierrad an der Aufnahmeeinrichtung an einem nicht-drehbaren Lagerbauteil angeordnet sein und sich hierauf im Dosierbetrieb drehen. Das drehbare oder das nicht-drehbare Lagerbauteil der Aufnahmeeinrichtung können an dem Montagebauteil lösbar oder nicht-lösbar angeordnet sein. Die lösbare Montage des Lagerbauteils kann einen Austausch des Dosierrads zusammen mit dem Lagerbauteil ermöglichen.

Das Dosierrad ist an dem Montagebauteil mittels der Aufnahmeeinrichtung stirnseitig angeordnet. Erfindungsgemäß ist das Dosierrad an einem oder mehreren Vorsprüngen an dem Montagebauteil lösbar aufgenommen. Es sind ein oder mehrere stirnseitige Vorsprünge an dem Montagebauteil vorgesehen, wahlweise an der Lagereinrichtung die als ein oder mehrere Stiftvorsprünge ausgeführt sind und, auf die das Dosierrad aufsteckbar ist, wobei die eine oder die mehreren Stiftvorsprünge hierbei zugeordnete Durchbrüche an dem Dosierrad durchgreifen. Das Dosierrad kann an der Aufnahmeeinrichtung des Montagebauteils in der aufgesteckten Stellung gesichert sein, beispielweise derart, dass zum Lösen des Dosierrads von der Aufnahmeeinrichtung ein mechanischer Widerstand überwunden werden muss, sodass ein unbeabsichtigtes Abfallen des Dosierrads von der Aufnahmeeinrichtung unterbunden ist.

Das Montagebauteil kann in der Montageöffnung an dem Gehäuse werkzeuglos montierbar sein. Hierdurch kann in einer Ausgestaltung das Dosierrad werkzeuglos montiert und austauschbar sein, was eine einfache Montage unterstützt..

Das Montagebauteil kann in der montierten Stellung in ein zugeordnetes Gewinde an dem Gehäuse eingeschraubt sein. Hierzu können einander zugeordnete Gewindegänge an dem Montagebauteil einerseits und dem Gehäuse andererseits ineinandergreifen. Eine Steigung des Schraubgewindes kann an eine Abstufung der Dicke verschiedener Dosierräder angepasst sein. Hierbei kann vorgesehen sein, dass ein Vorschub in axialer Richtung bei einer vollständigen oder einer halben Umdrehung (Drehung um 180 Grad oder 360 Grad) des Montagebauteils der Dickenabstufung von Dosierrädern entspricht. Der axiale Vorschub entspricht hierbei dem Dickenunterschied zwischen zwei Dosierrädern. Auf diese Weise kann der Bediener das Montagebauteil stets in eine definierte Schraubstellung bringen, die einen ordnungsgemäßen Betrieb des gerade eingesetzten Dosierrads sicherstellt, insbesondere hinsichtlich einer leichtgängigen Drehung des Dosierrads. Es wird vermieden, dass das Montagebauteil in zu großem oder zu geringem Umfang in das Gewinde an dem Gehäuse eingeschraubt wird, wodurch es zu Problemen des Betriebs des Dosierrads kommen kann, insbesondere dahingehend, dass das Dosierrad zu viel oder zu wenig Spiel hat, um die Dosierfunktion zu erfüllen.

An dem Montagebauteil und dem Gehäuse können einander zugeordnete Montagemarkierungen vorgesehen sein, die vorgegebene Drehstellungen des Montagebauteils relativ zum Gehäuse festlegen. Die Montagemarkierungen können eine Drehendstellung, in welcher das Montagebauteil so weit wie möglich eingeschraubt ist, und eine hierzu zurückversetzte Arbeitsstellung markieren, in welcher das Montagebauteil beim Einbringen des Montagebauteils in der montierten Stellung zurückgedreht wird, sodass eine Leichtgängigkeit für die Drehbewegung des Dosierrads sichergestellt ist. Beispielsweise können die Montagemarkierungen eine Montagemarkierung an dem Montagebauteil und zwei Montagemarkierungen an dem Gehäuse umfassen, wobei die Montagemarkierungen an dem Gehäuse die Drehendstellung und die zurückversetzte Arbeits- oder Betriebsstellung anzeigen. Beim Montieren des Montagebauteils wird dieses zunächst in die Endstellung gedreht, um dann in die Betriebsstellung zurückgedreht zu werden, sodass die jeweiligen Markierungen einander gegenüberliegen.

Die vorangehend in Verbindung mit der Schraubmontage des Montagebauteils beschriebenen Ausführungen können alternativ auch vorgesehen sein, wenn das Montagebauteil auf andere Weise an dem Gehäuse montiert ist, beispielsweise mittels einer Steckverbindung, bei der das Montagebauteil nicht eingeschraubt, sondern mittels translatorischer Bewegung eingesteckt wird. Hier kann ein Hebelmechanismus vorgesehen sein, um das Montagebauteil zunächst in die Endstellung zu bringen und dann mithilfe des Hebelmechanismus etwas zurückzuversetzen in die Betriebsstellung, wodurch wiederum die leichtgängige Drehung des Dosierrads sichergestellt ist. Rastende Steckstellungen können der Abstufung der Dicke verschiedener Dosierräder entsprechen.

Es kann eine Schiebereinrichtung vorgesehen sein, mit der im Gehäuse ein Materialweg für das granulare oder körnige Material zwischen der Einlassöffnung und der Auslassöffnung, insbesondere zwischen der Einlassöffnung und dem Dosierraum geschlossen und geöffnet werden kann. Die Schiebereinrichtung kann eine manuell zu bedienende Schiebereinrichtung sein. Es kann vorgesehen sein, dass die Schiebereinrichtung mehrere Schieberstellungen aufweist, sodass der Materialweg ganz geöffnet, teilweise geöffnet und vollständig verschlossen werden kann.

Die Auslassöffnung kann eine Mehrwegöffnung mit getrennten Ausgängen sein, die einzeln und / oder gemeinsam mittels einer Verschlusseinrichtung geschlossen und geöffnet werden können. Die Verschlusseinrichtung kann eine manuell zu bedienende Verschlusseinrichtung aufweisen, beispielsweise einen Hebelmechanismus. Mithilfe der Mehrwegöffnung können zum Beispiel eine erste Auslassöffnung und eine zweite Auslassöffnung bereitgestellt sein, wobei die erste Auslassöffnung mit einer Verteilvorrichtung zum Ausbringen des dosierten Materials verbindbar ist und die zweite Auslassöffnung freibleibend ausgebildet sein kann, sodass über die zweite Auslassöffnung zum Beispiel eine Entleerung des Dosierraums realisiert werden kann, insbesondere dann, wenn zuvor die Schiebereinrichtung geschlossen ist. Auch kann die zweite Auslassöffnung für einen Probe- oder Kalibrierbetrieb genutzt werden, um so Dosiermengen an der zweiten Auslassöffnung aufzufangen, zum Beispiel in einem Beutel, die zu Einstellungs- oder Testzwecken geprüft wird, bevor dann die Verschlusseinrichtung umgestellt wird, um im Betrieb das dosierte Material über die erste Auslassöffnung zur Verteilvorrichtung hin auszugeben.

Es kann eine Entleerungsöffnung vorgesehen sein, um insbesondere den Dosierraum zu entleeren. Die Entleerungsöffnung kann ergänzend zu der Einweg- oder Mehrwegauslassöffnung vorgesehen sein.

An dem Gehäuse kann eine Ablenkeinrichtung mit einer Ablenkfläche angeordnet sein, die der Auslassöffnung und / oder der Entleerungsöffnung zugeordnet und eingerichtet ist, aus der Auslassöffnung und / oder der Entleerungsöffnung austretendes Material abzulenken. Die Ablenkfläche kann benachbart zu einer oder mehrerer Auslassöffnungen und / oder der Entleerungsöffnung angeordnet sein, um hieraus austretendes Material ab- oder umzulenken, beispielsweise aus der zweiten Auslassöffnung austretendes Material in den Aufnahmebeutel umzulenken.

An dem Gehäuse kann eine Wechselbox angeordnet sein, die eingerichtet ist, mehrere Wechseldosierräder aufzunehmen. Die Wechselbox kann als offene oder geschlossene Box an dem Gehäuse gebildet sein. Die Wechselbox kann lösbar an dem Gehäuse aufgenommen sein. In der Wechselbox können mehrere Wechseldosierräder angeordnet werden, sodass diese für eine Montage in den Dosierraum zur Verfügung stehen. Die Wechseldosierräder können sich insbesondere dadurch unterscheiden, dass sie eine abgestufte Dicke aufweisen. Alternativ oder ergänzend können die Aufnahmetaschen auf der umlaufenden Oberfläche der Dosierräder in Form und Größe unterschiedlich ausgestaltet sein, um ein unterschiedliches Dosierverhalten zu realisieren, wenn das jeweilige Dosierrad auf der Antriebswelle in dem Dosierraum montiert ist.

Die Ablenkfläche kann an der Wechselbox angeordnet sein. Eine Oberfläche der Wechselbox dient als Ablenkfläche für das aus der Auslassöffnung und / oder der Entleerungsöffnung austretende, dosierte Material. Es kann bei dieser oder anderen Ausführungsformen vorgesehen sein, dass die Wechselbox in unterschiedlichen Stellungen relativ zum Gehäuse anordbar ist, beispielsweise mittels Schwenken der Wechselbox um eine Schwenkachse an dem Gehäuse. In den verschiedenen Stellungen kann die Wechselbox arretierbar sein. Die verschiedenen Stellungen können eine erste Stellung, in welcher die Wechselbox nicht als Ablenkeinrichtung dient, sowie eine zweite Stellung umfassen, in welcher die Ablenkfläche mittels der Wechselbox bereitgestellt ist.

Die Einlassöffnung kann an ein Materialreservoir für das granulare oder körnige Material koppeln. Das Materialreservoir, welches auch als Tank oder Vorratsbehälter bezeichnet werden kann, kann als ein Kunststoffbehälter ausgeführt sein. Das Materialreservoir kann oberhalb des Gehäuses angeordnet sein.

Die Auslassöffnung und / oder die Entleerungsöffnung können an dem Gehäuse in einem tiefsten Punkt des Dosierraums ausgebildet sein, was eine vollständige Entleerung unterstützt.

Die Antriebswelle kann sich quer zur Richtung des Materialwegs zwischen Einlassöffnung und Auslassöffnung erstrecken. Beispielsweise kann der Materialweg zwischen Einlassöffnung und Auslassöffnung über den Dosierraum vertikal ausgerichtet sein, sodass die Antriebswelle horizontal verläuft.

Die Montageöffnung kann an dem Gehäuse als seitliche Gehäuseöffnung ausgebildet sein.

In Verbindung mit der Verteilmaschine oder dem Verteilgerät zum Verteilen eines granularen oder körnigen Materials können die vorangehend erläuterten Alternativen entsprechend vorgesehen sein.

Bei der Verteilmaschine oder dem Verteilgerät kann die Vorrichtung zum Dosieren eine ergänzende Dosiervorrichtung sein, die zum Hinzudosieren des granularen oder körnigen Materials dient. Die Verteilmaschine weist bei dieser Ausführungsform eine Hauptdosiervorrichtung und eine Nebendosiervorrichtung (ergänzende Dosiervorrichtung) auf, wobei letztere der vorangehend beschriebenen Vorrichtung zum Dosieren entspricht. So kann bei einer Säreihe eine Hauptdosiervorrichtung für das Saatgut vorgesehen sein. Die Neben- oder Ergänzungsdosiervorrichtung kann dann dazu dienen, das granulare oder körnige Material in Ergänzung zum Saatgut zu verteilen oder auszubringen, beispielsweise in Form eines speziellen Düngers. Die Nebendosiervorrichtung kann als eine Mikrodosiereinrichtung ausgebildet sein, was insbesondere bedingen kann, dass bei der Säreihe ein Tank für das granulare oder körnige Material der Nebendosiervorrichtung kleiner als ein hiervon getrennt gebildeter Tank für die Hauptdosiervorrichtung für das Saatgut ist.

### Beschreibung von Ausführunasbeispielen

Im Folgenden werden weitere Ausführungsbeispiele unter Bezugnahme auf Figuren einer Zeichnung erläutert. Hierbei zeigen:
- Fig. 1: schematische Darstellungen einer Vorrichtung zum Dosieren eines granularen oder körnigen Materials für eine Verteilmaschine;
- Fig. 2: schematische Darstellungen der Vorrichtung aus Fig. 1 in einem Zustand zum Entleeren;
- Fig. 3: schematische Darstellungen der Vorrichtung zum Dosieren aus Fig. 1 in einem Zustand zum Abdrehen oder Kalibrieren;
- Fig. 4: schematische Darstellungen der Vorrichtung aus Fig. 1, wobei ein Montagebauteil mit hieran aufgenommenem Dosierrad zum Dosierradwechsel abgenommen ist; und
- Fig. 5: eine schematische Darstellung einer Säreihe mit einer Hauptdosiervorrichtung für das Saatgut und einer Nebendosiervorrichtung.

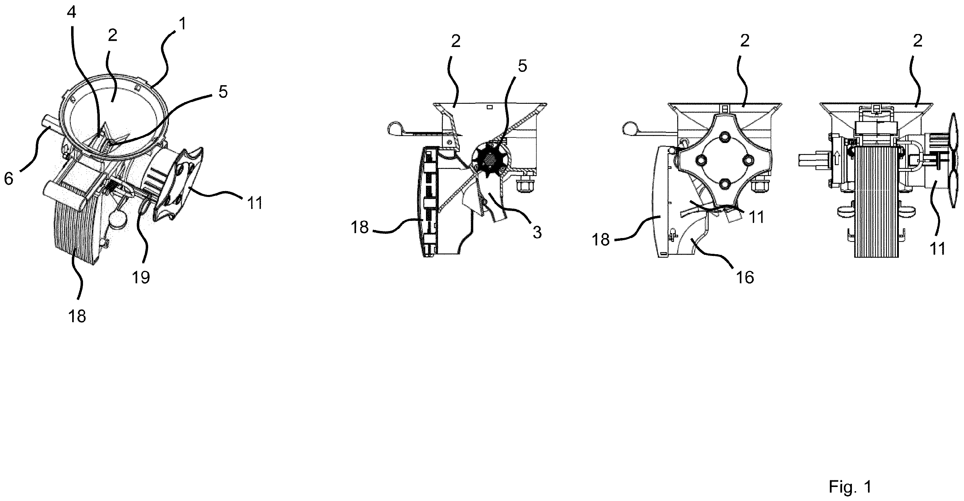

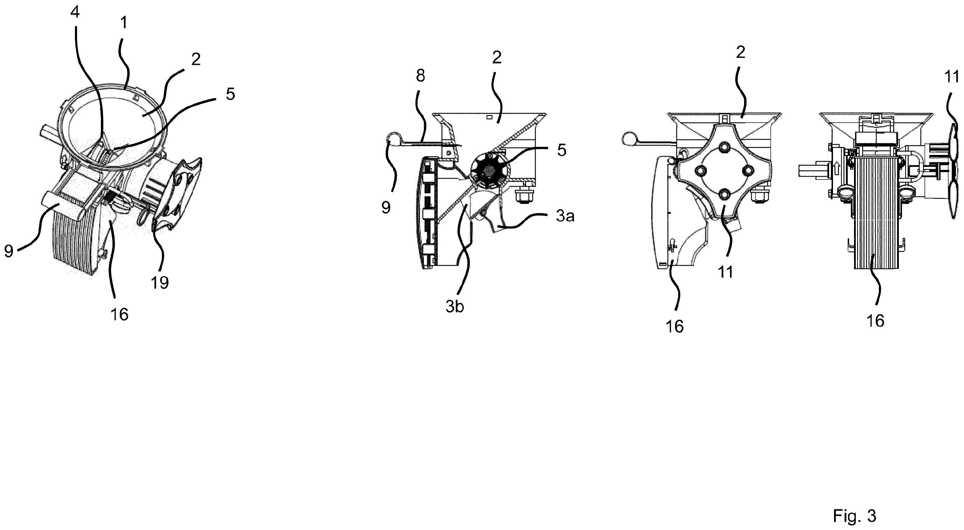

Die Fig. 1 bis 4 zeigen jeweils schematische Darstellungen einer Vorrichtung zum Dosieren eines granularen oder körnigen Materials für eine Verteilmaschine oder ein Verteilgerät, wobei jeweils eine perspektivische Darstellung, eine Schnittdarstellung sowie Darstellungen von vorn und von der Seite gezeigt sind.

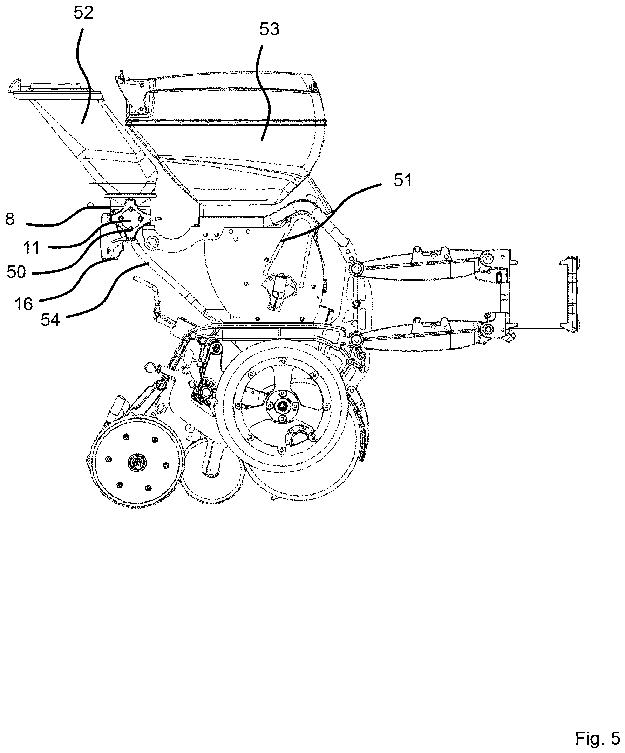

Die Vorrichtung zum Dosieren weist ein Gehäuse 1 auf, an dem eine Einlassöffnung 2 und eine Auslassöffnung 3 gebildet sind, sodass ein zu dosierendes, granulares oder körniges Material von der Einlassöffnung 2 über einen Dosierraum 4 zu der Auslassöffnung 3 gelangen kann. An die Einlassöffnung 2 koppelt beim Einbau der Vorrichtung in eine Verteilmaschine ein Materialreservoir (Tank) mit dem zu dosierenden Material, was unten beispielhaft für eine Säreihe in Fig. 5 gezeigt ist. Von der Auslassöffnung 3 gelangt das dosierte Material zu einer Verteilvorrichtung, beispielsweise über eine flexible Schlauchverbindung. Mittels der Verteilvorrichtung wird das granulare oder körnige Material dann ausgebracht, beispielsweise Dünger, Saatgut oder anderes Streugut.

In dem Dosierraum 4 ist ein Dosierrad 5 auf einer Antriebswelle 6 angeordnet, die mithilfe einer Antriebseinrichtung (nicht dargestellt) angetrieben wird, beispielsweise einem Elektromotor. Bei der dargestellten Ausführungsform erstreckt sich ein Materialweg des zu dosierenden granularen oder körnigen Materials in vertikaler Richtung von der Einlassöffnung 2 über den Dosierraum 4 zu der Auslassöffnung 3, die unterhalb des Dosierrads 5 angeordnet ist. Die Antriebswelle 5 erstreckt sich hierzu quer in horizontaler Richtung.

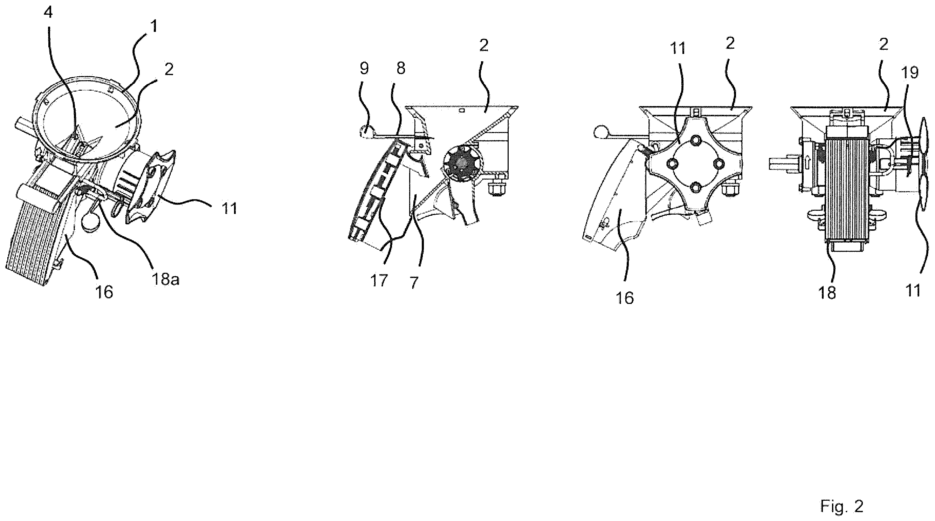

Die Auslassöffnung 3 ist als Mehrwegöffnung mit einer ersten Auslassöffnung 3a und einer zweiten Auslassöffnung 3b ausgebildet, die beim gezeigten Ausführungsbeispiel jeweils im tiefsten Bereich des Dosierraums 4 angeordnet sind. Während die erste Auslassöffnung 3a dazu dient, das dosierte Material zur Verteilvorrichtung auszugeben, kann über die zweite Auslassöffnung 3b eine Entleerung stattfinden, was in Fig. 2 schematisch gezeigt ist. Auch kann die zweite Auslassöffnung 3b dazu genutzt werden, eine dosierte Menge des Menge Materials aufzufangen, zum Beispiel mittels eines angehängten Beutels (nicht dargestellt), beispielweise zu Kalibrier- oder testzwecken.

Weiterhin ist eine Entleerungsöffnung 7 vorgesehen, über die der Dosierraum 4 entleert werden kann, wahlweise auch ein darüber liegendes Reservoir (Tank) für das granulare oder körnige Material.

Oberhalb des Dosierraums 4 ist eine Schiebereinrichtung 8 angeordnet, die bei der gezeigten Ausführungsform manuell bedienbar ist, um den Zugang über die Einlassöffnung 2 zum Dosierraum 4 zu öffnen oder zu schließen, indem ein Schieber 9 in horizontaler Richtung verschoben wird.

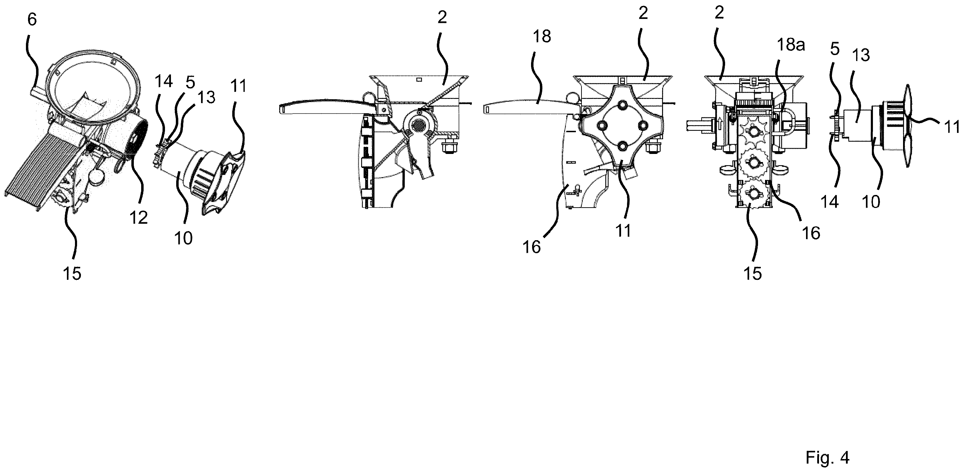

Zum Montieren und Demontieren ist das Dosierrad 5 an einer Aufnahmeeinrichtung 10 eines Montagebauteils 11 lösbar aufgenommen (vgl. Fig. 4). Das Montagebauteil 11 ist in einer montierten Stellung, die in den Fig. 1 bis 3 gezeigt ist, in einer Montageöffnung 12 an dem Gehäuse 1 angeordnet, derart, dass beim Montieren des Montagebauteils 11 in der montierten Stellung das Dosierrad 5, während es an der Aufnahmeeinrichtung 10 aufgenommen ist, auf der Antriebswelle 6 montiert wird. Das Dosierrad 5 ist an der Aufnahmeeinrichtung 10 an einem drehbaren Lagerbauteil 13 mithilfe von stirnseitigen Vorsprüngen 14 aufgenommen, insbesondere lösbar, sodass sich das Dosierrad 5 im Dosierbetrieb mit dem drehbaren Lagerbauteil 13 dreht, während das Montagebauteil 10 in der montierten Stellung angeordnet ist. In einer alternativen Ausgestaltung kann das Dosierrad 5 an einem nicht drehbaren Lagerbauteil angeordnet sein, wobei die Lagerung das Drehen des Dosierrads 5 im Dosierbetrieb zulässt.

Zum Wechseln des Dosierrads 5 wird bei der gezeigten Ausführungsform gemäß Fig. 4 das Montagebauteil 11 aus der montierten Stellung und von dem Gehäuse 1 abgenommen, wobei hierbei das Dosierrad 5 zwangweise von der Antriebswelle 6 abgenommen wird. Montagebauteil 11 mit Aufnahmeeinrichtung 10 und Dosierrad 5 werden gemeinsam vom Gehäuse 1 abgenommen, sodass anschließend das Dosierrad 5 wahlweise von der Aufnahmeeinrichtung 10 gelöst und getauscht werden kann. Es kann hierauf ein Wechseldosierrad 15 (vgl. Fig. 4) an dem Montagebauteil 11 lösbar montiert werden, um das Wechseldosierrad 15 dann in dem Dosierraum 4 zu montieren. Es ist eine Wechselbox 16 vorgesehen, in der die mehreren Wechseldosierräder 15 lösbar angeordnet sind. Die verschiedenen Dosierräder können sich insbesondere hinsichtlich ihrer Dicke oder Breite unterscheiden.

Die Wechselbox 16 ist an dem Gehäuse 1 schwenkbar montiert. Eine Rückseite 17 der Wechselbox 16 dient beim Entleeren (vgl. Fig. 2) als Ablenkfläche für das aus der Entleerungsöffnung 7 austretende Material. Bei der gezeigten Ausführungsform ist die Wechselbox 16 als geschlossene Wechselbox ausgeführt, mit einem schwenkbaren Deckel 18, mit dem die Wechselbox 16 geöffnet und geschlossen werden kann. Die Wechselbox 16 ist unterhalb des Schiebers 9 angeordnet und in den verschiedenen Schwenkstellungen mittels einer Arretiereinrichtung 18a jeweils arretierbar, insbesondere einer geschlossenen und einer geöffneten Stellung (vgl. Fig. 1 und 4).

Das Montagebauteil 11 ist in das Gehäuse 1 eingeschraubt. An dem Gehäuse 1 und dem Montagebauteil 11 sind Montagemarkierungen 19 angeordnet, sodass der Bediener für das Montagebauteil 11 vorgegebene Dreh- oder Schraubstellungen auswählen kann, die für das Dosierrad 5 eine leichtgängige Drehbarkeit erlauben, wenn das Montagebauteil 11 in der montierten Stellung angeordnet ist.

Das Gehäuse 1 sowie das Montagebauteil 11, die Schiebereinrichtung 8 und die Wechselbox 16 können aus einem Kunststoffmaterial hergestellt sein. Das Dosierrad 5 kann aus Metall oder Kunststoff bestehen.

Fig. 5 zeigt eine schematische Darstellung einer Säreihe, bei der die in den Fig. 1 bis 4 gezeigte Vorrichtung zum Dosieren als eine Neben- oder Zusatzdosiervorrichtung 50 vorgesehen ist, mit der das granulare oder körnige Material, zum Beispiel ein Düngermaterial, beim Ausbringen des Saatguts hinzudosiert wird. Das Saatgut selbst wird mittels einer Hauptdosiervorrichtung 51 dosiert und ausgebracht. Die Neben- und die Hauptdosiervorrichtung 50, 51 weisen einen jeweils zugeordneten Tank 52, 53 auf. An die Nebendosiervorrichtung 50 schließt sich eine Ausgangsleitung 54 an, mit der das dosierte Material zur Verteilvorrichtung übertragen wird. Fig. 5 zeigt beispielhaft eine Säreihe, wie sie soweit es die Hauptdosiervorrichtung 51 betrifft, in verschiedenen Ausführungsformen als solche bekannt ist.

Der Schutzumfang der Erfindung wird durch die beigefügten Ansprüche definiert.

## Patentansprüche

1. Vorrichtung zum Dosieren eines granulären oder körnigen Materials in einer Verteilmaschine, mit
- einem Gehäuse (1);
- einer Einlassöffnung (2), die an dem Gehäuse (1) gebildet ist und durch die ein granulares oder körniges Material in dem Gehäuse (1) zum Dosieren eingebracht werden kann;
- einer Auslassöffnung (3), die an dem Gehäuse (1) gebildet ist und durch die das granulare oder körnige Material nach dem Dosieren aus dem Gehäuse (1) ausgebracht werden kann;
- einem Dosierraum (4), der in dem Gehäuse (1) gebildet ist, derart, dass das granulare oder körnige Material in dem Gehäuse (1) von der Einlassöffnung (2) über den Dosierraum (4) zu der Auslassöffnung (3) gelangen kann;
- einem Dosierrad (5), das in dem Dosierraum (4) auf einer Antriebswelle (6) angeordnet und eingerichtet ist, das über die Einlassöffnung (2) zugeführte granulare oder körnige Material zu dosieren;
- einer Montageöffnung (12), die an dem Gehäuse (1) gebildet und durch die das Dosierrad (5) wechselbar in dem Dosierraum (4) montierbar ist; und
- einem Montagebauteil (11), welches in einer montierten Stellung lösbar in der Montageöffnung (12) und diese zumindest teilweise verschließend an dem Gehäuse (1) angeordnet ist, wobei das Montagebauteil (11) eine Aufnahmeeinrichtung (10) zum lösbaren Aufnehmen des Dosierrads (5) aufweist, derart, dass das an der Aufnahmeeinrichtung (10) aufgenommene Dosierrad (5) beim Anordnen des Montagebauteils (11) in der montierten Stellung auf der Antriebswelle (6) montiert wird und dass beim Lösen des Montagebauteils (11) aus der montierten Stellung das Dosierrad (5) zwangsweise von der Antriebswelle (6) abgenommen wird, so dass das Dosierrad (5) hierdurch aus dem Dosierraum (4) entfernbar und zusammen mit dem Montagebauteil (11) von dem Gehäuse (1) abnehmbar ist;
**dadurch gekennzeichnet, dass** die Aufnahmeeinrichtung (10) mindestens einen stirnseitigen Stiftvorsprung (14) aufweist, auf den das Dosierrad (5) lösbar aufgesteckt ist, derart, dass das Dosierrad (5) an dem Montagebauteil (11) stirnseitig angeordnet ist und der mindestens eine stirnseitige Stiftvorsprung (14) einen Durchbruch des Dosierrads (5) durchgreift.

2. Vorrichtung nach Anspruch 1, **dadurch gekennzeichnet**, **'**dass das an der Aufnahmeeinrichtung (10) aufgenommene Dosierrad (5) auf der Antriebswelle (6) in einer Dosier-Betriebsstellung montiert ist, wenn das Montagebauteil (11) in der montierten Stellung angeordnet ist.

3. Vorrichtung nach Anspruch 1 oder 2, **dadurch gekennzeichnet, dass** das an der Aufnahmeeinrichtung (10) aufgenommene Dosierrad (5) drehbar ist, zumindest wenn das Montagebauteil (11) in der montierten Stellung angeordnet ist.

4. Vorrichtung nach Anspruch 3, **dadurch gekennzeichnet, dass** die Aufnahmeeinrichtung (10) ein drehbares Lagerbauteil (13) aufweist, an dem das Dosierrad (5) lösbar aufgenommen ist.

5. Vorrichtung nach mindestens einem der vorangehenden Ansprüche, **dadurch gekennzeichnet, dass** das Montagebauteil (11) in der Montageöffnung (12) an dem Gehäuse (1) werkzeuglos montierbar ist.

6. Vorrichtung nach mindestens einem der vorangehenden Ansprüche, **dadurch gekennzeichnet, dass** das Montagebauteil (11) in der montierten Stellung in ein zugeordnetes Gewinde an dem Gehäuse (1) eingeschraubt ist.

7. Vorrichtung nach mindestens einem der vorangehenden Ansprüche, **dadurch gekennzeichnet, dass** eine Schiebereinrichtung (8) vorgesehen ist, mit der im Gehäuse (1) ein Materialweg für das granuläre oder körnige Material zwischen der Einlassöffnung (2) und dem Dosierraum (4) geschlossen und geöffnet werden kann.

8. Vorrichtung nach mindestens einem der vorangehenden Ansprüche, **dadurch gekennzeichnet, dass** die Auslassöffnung (3) eine Mehrwegöffnung mit getrennten Ausgängen ist, die einzeln und / oder gemeinsam mittels einer Verschlusseinrichtung geschlossen und geöffnet werden können.

9. Vorrichtung nach mindestens einem der Ansprüche, **dadurch gekennzeichnet, dass** an dem Gehäuse (1) eine Ablenkeinrichtung mit einer Ablenkfläche angeordnet ist, die der Auslassöffnung (3) zugeordnet und eingerichtet ist, aus der Auslassöffnung (3) austretendes Material abzulenken.

10. Vorrichtung nach mindestens einem der vorangehenden Ansprüche, **dadurch gekennzeichnet, dass** an dem Gehäuse (1) eine Wechselbox (16) angeordnet ist, die eingerichtet ist, mehrere Wechseldosierräder aufzunehmen.

11. Vorrichtung nach den Ansprüchen 9 und 10, **dadurch gekennzeichnet, dass** die Ablenkfläche (17) an der Wechsefbox (12) angeordnet ist.

12. Vorrichtung nach mindestens einem der vorangehenden Ansprüche, **dadurch gekennzeichnet, dass** die Einlassöffnung (2) an ein Materialreservoir für das granulare oder körnige Material koppelt.

13. Verteilmaschine zum Verteilen eines granularen oder körnigen Materials wie Saatgut, Dünger oder Streugut, insbesondere Sämaschine, Düngerstreuer, Streumaschine oder Streugerät, mit einer Vorrichtung zum Dosieren nach mindestens einem der vorangehenden Ansprüche.

## Claims

1. A device for dosing a granular or grainy material in a distribution machine, having
- a housing (1);
- an inlet opening (2), which is formed on the housing (1) and through which a granular or grainy material can be introduced in the housing (1) for dosing;
- an outlet opening (3), which is formed on the housing (1) and through which the granular or grainy material can be discharged from the housing (1) after dosing;
- a dosing chamber (4), which is formed in the housing (1) in such a way that the granular or grainy material in the housing (1) can pass from the inlet opening (2) to the outlet opening (3) via the dosing chamber (4);
- a dosing wheel (5), which is arranged in the dosing chamber (4) on a drive shaft (6) and which is configured to dose the granular or grainy material supplied via the inlet opening (2);
- a mounting opening (12), which is formed at the housing (1) and through which the dosing wheel (5) can be replaceably mounted in the dosing chamber (4); and
- a mounting component (11), which is arranged detachably in the mounting opening (12) in a mounted position and at least partly closes the mounting opening (12) at the housing (1), wherein the mounting component (11) has a receiving device (10) for releasably receiving the dosing wheel (5) such that the dosing wheel (5) received on the receiving device (10) is mounted on the drive shaft (6) when the mounting component (11) is arranged in the mounted position and that when the mounting component (11) is released from the mounted position, the dosing wheel (5) is compulsorily removed from the drive shaft (6) such that the dosing wheel (5) can thereby be removed from the dosing chamber (4) and removed from the housing (1) together with the mounting component (11);
**characterized in that** the receiving device (10) has at least one end-face pin projection (14), onto which the dosing wheel (5) is detachably fitted such that the dosing wheel (5) is arranged on the end face of the mounting component (11) and the at least one end-face pin projection (14) engages through an opening of the dosing wheel (5).

2. The device according to Claim 1, **characterized in that** the dosing wheel (5) received on the receiving device (10) is mounted on the drive shaft (6) in a dosing operation position when the mounting component (11) is arranged in the mounted position.

3. The device according to Claim 1 or 2, **characterized in that** the dosing wheel (5) received on the receiving device (10) can be rotated, at least when the mounting component (11) is arranged in the mounted position.

4. The device according to Claim 3, **characterized in that** the receiving device (10) has a rotatable bearing component (13), on which the dosing wheel (5) is releasably received.

5. The device according to at least one of the preceding claims, **characterized in that** the mounting component (11) can be mounted in the mounting opening (12) on the housing (1) without tools.

6. The device according to at least one of the preceding claims, **characterized in that** the mounting component (11) is screwed into an assigned thread on the housing (1) in the mounted position.

7. The device according to at least one of the preceding claims, **characterized in that** a slide device (8) is provided, with which a material path for the granular or grainy material can be closed and opened in the housing (1) between the inlet opening (2) and the dosing chamber (4).

8. The device according to at least one of the preceding claims, **characterized in that** the outlet opening (3) is a multipath-opening with separate outlets, which can be closed and opened individually and/or together by means of a closing device.

9. The device according to at least one of the claims, **characterized in that** a deflecting device with a deflecting surface is arranged on the housing (1), is assigned to the outlet opening (3) and is configured to deflect material discharged from the outlet opening (3).

10. The device according to at least one of the preceding claims, **characterized in that** an interchangeable box (16) is arranged on the housing (1) and is configured to accommodate a plurality of interchangeable dosing wheels.

11. The device according to Claims 9 and 10, **characterized in that** the deflecting surface (17) is arranged on the interchangeable box (12).

12. The device according to at least one of the preceding claims, **characterized in that** the inlet opening (2) is coupled to a material reservoir for the granular or grainy material.

13. A distribution machine for spreading a granular or grainy material such as seed, fertilizer or spreading material, in particular a seed drill, fertilizer distribution machine, spreading machine or spreading device, having a device for dosing according to at least one of the preceding claims.

## Revendications

1. Dispositif, destiné à doser une matière granuleuse ou granulaire dans une machine distributrice, avec
- un corps (1) ;
- un orifice d'entrée (2), qui est formé sur le corps (1) et à travers lequel une matière granulaire ou granuleuse peut être introduite dans le corps (1) pour le dosage ;
- un orifice de sortie (3), qui est formé sur le corps (1) et à travers lequel la matière granulaire ou granuleuse peut être évacuée du corps (1) après le dosage ;
- un espace de dosage (4), qui est formé dans le corps (1), de telle sorte que dans le corps (1), la matière granulaire ou granuleuse puisse arriver de l'orifice d'entrée (2) via l'espace de dosage (4) vers l'orifice de sortie (3) ;
- une roue de dosage (5), qui dans l'espace de dosage (4) est placée sur un arbre d'entraînement (6) et qui est aménagée pour doser la matière granulaire ou granuleuse alimentée via l'orifice d'entrée (2) ;
- un orifice de montage (12), qui est formé au corps (1) et à travers lequel la roue de dosage (5) est susceptible d'être montée de manière interchangeable dans l'espace de dosage (4) ; et
- un composant de montage (11), lequel dans une position montée est placé de manière amovible dans l'orifice de montage (12) et en fermant celui-ci au moins en partie est placé sur le corps (1), le composant de montage (11) comportant un système de logement (10), destiné à recevoir de manière amovible la roue de dosage (5), de telle sorte que, lors du placement du composant de montage (11) dans la position montée, la roue de dosage (5) reçue sur le système de logement (10) soit montée sur l'arbre d'entraînement (6) et que lors de la désolidarisation du composant de montage (11) hors de la position montée, la roue de dosage (5) soit retirée obligatoirement de l'arbre d'entraînement (6), de sorte que de ce fait, la roue de dosage (5) puisse être retirée de l'espace de dosage (4) et désolidarisée du corps (1), conjointement avec le composant de montage (11) ;
**caractérisé en ce que** le système de logement (10) comporte au moins un goujon en saillie (14) frontal, sur lequel la roue de dosage (5) est emboîtée de manière amovible, de telle sorte que la roue de dosage (5) soit placée de manière frontale sur le composant de montage (11) et que l'au moins un goujon en saillie (14) frontal traverse un ajour de la roue de dosage (5).

2. Dispositif selon la revendication 1, **caractérisé en ce que** la roue de dosage (5) reçue sur le système de logement (10) est montée sur l'arbre d'entraînement (6) dans une position de service en dosage lorsque le composant de montage (11) est placé dans la position montée.

3. Dispositif selon la revendication 1 ou 2, **caractérisé en ce que** la roue de dosage (5) reçue sur le système de logement (10) est rotative, au moins lorsque le composant de montage (11) est placé dans la position montée.

4. Dispositif selon la revendication 3, **caractérisé en ce que** le système de logement (10) comporte un composant de logement (13) rotatif, sur lequel la roue de dosage (5) est reçue de manière amovible.

5. Dispositif selon au moins l'une quelconque des revendications précédentes, **caractérisé en ce que** le composant de montage (11) est susceptible d'être monté sans outil sur le corps (1), dans l'orifice de montage (12).

6. Dispositif selon au moins l'une quelconque des revendications précédentes, **caractérisé en ce que** dans la position montée, le composant de montage (11) est vissé dans un taraudage associé sur le corps (1).

7. Dispositif selon au moins l'une quelconque des revendications précédentes, **caractérisé en ce qu'**il est prévu un système pousseur (8), à l'aide duquel dans le corps (1) un trajet de matière pour la matière granulaire ou granuleuse entre l'orifice d'entrée (2) et l'espace de dosage (4) peut s'ouvrir et se fermer.

8. Dispositif selon au moins l'une quelconque des revendications précédentes, **caractérisé en ce que** l'orifice de sortie (3) est un orifice multivoies disposant de sorties séparées, qui peuvent se fermer et s'ouvrir individuellement et / ou conjointement au moyen d'un dispositif de fermeture.

9. Dispositif selon au moins l'une quelconque des revendications précédentes, **caractérisé en ce que** sur le corps (1) est placé un déflecteur doté d'une surface déflectrice, qui est associé à l'orifice de sortie (3) et qui est aménagé pour dévier de la matière sortant de l'orifice de sortie (3).

10. Dispositif selon au moins l'une quelconque des revendications précédentes, **caractérisé en ce que** sur le corps (1) est placée une boîte de changement rapide (16), qui est aménagée pour recevoir plusieurs roues de dosage interchangeables.

11. Dispositif selon les revendications 9 et 10, **caractérisé en ce que** la surface déflectrice (17) est placée sur la boîte de changement rapide (12).

12. Dispositif selon au moins l'une quelconque des revendications précédentes, **caractérisé en ce que** l'orifice d'entrée (2) est accouplé sur un réservoir de matière pour la matière granulaire ou granuleuse.

13. Machine distributrice, destinée à distribuer une matière granulaire ou granuleuse comme des semences, des fertilisants ou des produits d'épandage, notamment semoir, distributeur d'engrais, épandeuse ou appareil d'épandage, doté d'un dispositif de dosage selon au moins l'une quelconque des revendications précédentes.
